# EUROPÄISCHE PATENTANMELDUNG

(11) **EP 2 955 406 A2**
(43) Veröffentlichungstag der Anmeldung: **16.12.2015**
(21) Anmeldenummer: 15171090.2
(22) Anmeldetag: 09.06.2015
(51) Int. Cl.: F16D 13/04, F16D 13/54

(54) **REIBUNGSKUPPLUNG**

(30) Priorität: 10.06.2014 DE 102014210976
(71) Anmelder: Schaeffler Technologies AG & Co. KG, 91074 Herzogenaurach (DE)
(72) Erfinder: Finkenzeller, Marc, 77723 Gengenbach (DE)

(57) **Zusammenfassung**

Es ist eine Reibungskupplung zum Kuppeln einer Antriebswelle eines Kraftfahrzeugmotors mit mindestens einer Getriebeeingangswelle, insbesondere für eine Doppelkupplung, vorgesehen mit einer mit der Antriebswelle koppelbaren Gegenplatte (12) zum Einleiten eines Drehmoments einer relativ zur Gegenplatte axial verlagerbare Anpressplatte (14) zum reibschlüssigen Verpressen einer mit einer Getriebeeingangswelle koppelbaren Kupplungsscheibe (16) zum Ausleiten des Drehmoments zwischen der Anpressplatte und der Gegenplatte, einem an der Anpressplatte angreifbaren Rampensystem (34) zum Verlagern der mindestens einen Anpressplatte relativ zur Gegenplatte, wobei das Rampensystem eine Eingangsrampe (32) und eine relativ zur Eingangsrampe zur Veränderung einer axialen Erstreckung des Rampensystems verdrehbare Ausgangsrampe (38) aufweist, und einer Vorsteuerkupplung zum Auslösen eines Verdrehens der Eingangsrampe relativ zur Ausgangsrampe infolge einer Differenzdrehzahl der Gegenplatte zur Getriebeeingangswelle. Durch die nur mittelbar über die Vorsteuerkupplung an der Anpressplatte angreifende Betätigungskraft kann über die Vorsteuerkupplung (24) eine Kraftverstärkung und/oder eine Drehmomentabzweigung aus dem zu übertragenen Drehmoment zum Schließen der Reibungskupplung erreicht werden, so dass die Kupplungsscheibe mit einer deutlich erhöhten Anpresskraft verpresst werden kann, wodurch ein sicheres Schließen der Reibungskupplung mit geringem konstruktivem Aufwand ermöglicht ist.

## Beschreibung

Die Erfindung betrifft eine Reibungskupplung, insbesondere für eine Doppelkupplung, mit deren Hilfe eine Antriebswelle eines Kraftfahrzeugmotors mit mindestens einer Getriebeeingangswelle eines Kraftfahrzeuggetriebes gekuppelt werden kann.

Aus WO 2011 050 772 A1 ist eine nasse Lamellenkupplung zum Kuppeln einer Antriebswelle eines Kraftfahrzeugmotors mit einer Getriebeeingangswelle eines Kraftfahrzeuggetriebes bekannt, bei der eine Vorkupplung mit einem Rampenmechanismus vorgesehen ist, um eine erhöhte Anpresskraft im geschlossenen Zustand der Reibungskupplung zu erreichen.

Es besteht ein ständiges Bedürfnis mit geringem konstruktivem Aufwand eine Reibungskupplung sicher schließen zu können.

Es ist die Aufgabe der Erfindung Maßnahmen aufzuzeigen, die ein sicheres Schließen einer Reibungskupplung mit geringem konstruktivem Aufwand ermöglichen.

Die Lösung der Aufgabe erfolgt erfindungsgemäß durch eine Reibungskupplung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine Reibungskupplung zum Kuppeln einer Antriebswelle eines Kraftfahrzeugmotors mit mindestens einer Getriebeeingangswelle, insbesondere für eine Doppelkupplung, vorgesehen mit einer mit der Antriebswelle koppelbaren Gegenplatte zum Einleiten eines Drehmoments einer relativ zur Gegenplatte axial verlagerbare Anpressplatte zum reibschlüssigen Verpressen einer mit einer Getriebeeingangswelle koppelbaren Kupplungsscheibe zum Ausleiten des Drehmoments zwischen der Anpressplatte und der Gegenplatte, einem an der Anpressplatte angreifbaren Rampensystem zum Verlagern der mindestens einen Anpressplatte relativ zur Gegenplatte, wobei das Rampensystem eine Eingangsrampe und eine relativ zur Eingangsrampe zur Veränderung einer axialen Erstreckung des Rampensystems verdrehbare Ausgangsrampe aufweist, und einer Vorsteuerkupplung zum Auslösen eines Verdrehens der Eingangsrampe relativ zur Ausgangsrampe infolge einer Differenzdrehzahl der Gegenplatte zur Getriebeeingangswelle.

Im geschlossenen Zustand der Reibungskupplung weisen die Gegenplatte und die Getriebeeingangswelle im schlupffreien Betrieb im Wesentlichen die gleiche Drehzahl auf. Im geöffneten Zustand der Reibungskupplung können die Gegenplatte und die Getriebeeingangswelle mit einer unterschiedlichen Drehzahl drehen, so dass sich eine Drehzahldifferenz zwischen der Gegenplatte und der Getriebeeingangswelle einstellt. Das über die Gegenplatte in die Reibungskupplung eingeleitete Drehmoment kann zumindest teilweise über die zumindest teilweise geschlossene Vorsteuerkupplung an die Getriebeeingangswelle übertragen werden, so dass im geschlossenen Zustand der Vorsteuerkupplung zumindest zeitweise eine Drehmomentübertragung zwischen der Gegenplatte und der Getriebeeingangswelle an der Anpressplatte und der Kupplungsscheibe vorbei stattfindet. Da eine Drehzahlangleichung zwischen der Gegenplatte und der Getriebeeingangswelle noch nicht erfolgt ist, liegt eine Drehzahldifferenz zwischen der Gegenplatte und der Getriebeeingangswelle vor. Dadurch kann auch ein Funktionselement der Vorsteuerkupplung, beispielsweise eine mit der Getriebeeingangswelle gekoppelte Vorsteuerkupplungsscheibe, eine Relativdrehung zu einem anderen Funktionselement der Vorsteuerkupplung oder der Gegenplatte ausführen und gleichzeitig ein Drehmoment beispielsweise schlupfend übertragen. Die Relativdrehung innerhalb der Vorsteuerkupplung kann über eine geeignete Koppelung des Rampensystems mit der Vorsteuerkupplung in eine Relativdrehung der Eingangsrampe zur Ausgangsrampe umgesetzt werden, so dass sich die axiale Erstreckung des Rampensystems infolge der Drehzahldifferenz innerhalb der Vorsteuerkupplung und somit infolge der Drehzahldifferenz der Gegenplatte zur Getriebeeingangswelle ändern kann. Durch die sich ändernde Erstreckung des Rampensystems kann die Anpressplatte zum Schließen der Reibungskupplung verlagert werden, wobei eine Verlagerungskraft zum Verlagern der Anpressplatte aus dem über die Vorsteuerkupplung übertragenen Drehmoment abgezweigt werden kann. Wenn sich die Erstreckung des Rampensystems soweit geändert hat, dass die Anpressplatte die Kupplungsscheibe verpresst, sind nach einer Beendigung des Schlupfbetriebs die Drehzahlen der Gegenplatte und der Getriebeeingangswelle miteinander synchronisiert, so dass eine Drehzahldifferenz zwischen der Gegenplatte und der Getriebeeingangswelle nicht mehr vorliegt. Das Rampensystem kann dann in der erreichten Stellung verharren. In der geschlossenen Stellung der Reibungskupplung kann der überwiegende Teil des zu übertragenen Drehmoments über die Reibpaarung der Gegenplatte mit der Kupplungsscheibe erfolgen, wobei ein kleinerer Anteil des zu übertragenen Drehmoments über die Vorsteuerkupplung übertragen werden kann. Dadurch kann über die Vorsteuerkupplung eine entsprechend hohe Anpresskraft auf die Anpressplatte ausgeübt werden, so dass ein entsprechend höheres Drehmoment sicher und ohne Durchrutschen übertragen werden kann. Hierbei kann über eine geeignete Wahl der Rampensteigung des Rampensystems eine Kraftübersetzung erreicht werden, so dass bei einer geringen Betätigungskraft zum Betätigen der Vorsteuerkupplung eine erhöhte übersetzte Anpresskraft erreicht werden kann. Ferner kann ein Teil des zu übertragenen Drehmoments zur Bereitstellung der Anpresskraft genutzt werden, so dass aus einer weiteren Energiequelle die Anpresskraft gespeist werden kann. Durch die nur mittelbar über die Vorsteuerkupplung an der Anpressplatte angreifende Betätigungskraft kann über die Vorsteuerkupplung eine Kraftverstärkung und/oder eine Drehmomentabzweigung aus dem zu übertragenen Drehmoment zum Schließen der Reibungskupplung erreicht werden, so dass die Kupplungsscheibe mit einer deutlich erhöhten Anpresskraft verpresst werden kann, wodurch ein sicheres Schließen der Reibungskupplung mit geringem konstruktivem Aufwand ermöglicht ist.

Über die Rampensteigung der Rampen des Rampensystems kann eine Kraftverstärkung erfolgen, so dass im Vergleich zu der an der Anpressplatte erreichbaren Anpresskraft eine deutlich geringere Betätigungskraft zum Schließen der Vorsteuerkupplung aufgebracht werden braucht. Dadurch kann ein, insbesondere hydraulisches, Betätigungssystem deutlich kleiner und bauraumsparender dimensioniert werden, als wenn das Betätigungssystem die Anpressplatte direkt verlagern würde. Ferner ist es möglich die Vorsteuerkupplung aus dem Bereich der Anpressplatte heraus zu verlagern. Die Vorsteuerkupplung kann dadurch insbesondere im Vergleich zur Anpressplatte zumindest zu einem Großteil radial innen zur Anpressplatte positioniert sein, so dass Bauraum radial innerhalb zu Reibbelägen der Kupplungsscheibe genutzt werden kann. Die Reibkontakte der Kupplungsscheibe können dadurch in einem vergleichsweise weit radial äußeren Bereich vorgesehen werden, so dass eine entsprechend geringe Erstreckung der Reibungskupplung nach radial inner erforderlich ist, um eine entsprechend große Reibfläche realisieren zu können. Hierbei kann die Erkenntnis ausgenutzt werden, dass die Vorsteuerkupplung nur ein geringes Drehmoment zu übertragen braucht, um das Rampensystem zu betätigen, so dass eine entsprechend geringere Reibfläche auf einem im Vergleich zur Kupplungsscheibe kleineren mittleren Reibradius bereits ausreichend ist.

Die Rampen des Rampensystems können direkt aufeinander abgleiten oder über mindestens eine Kugel, einen Zylinder oder sonstiges drehbares Element relativ zueinander verdreht werden, so dass ein Kugel-Rampen-System ausgebildet werden kann. Durch das Verdrehen der Rampen relativ zu einander kann sich der Abstand der von der jeweils anderen gegenüberliegenden Rampe wegweisenden Rückseiten der Eingangsrampe und der Ausgangsrampe verändern, so dass sich entsprechend die axiale Erstreckung des Rampensystems verringern beziehungsweise vergrößern kann. Vorzugsweise weisen die Rampen der Eingangsrampe und der Ausgangsrampe in einer abgewickelten Seitenansicht einen im Wesentlichen V-förmigen Steigungsverlauf auf. Dadurch ist es möglich ausgehend von einer definierten Offenstellung der Reibungskupplung sowohl bei einem Drehmomentfluss von der Gegenplatte zur Getriebeeingangswelle ("Zugbetrieb") durch eine Relativdrehung der Eingangsrampe zur Ausgangsrampe in einer ersten Umfangsrichtung als auch bei einem Drehmomentfluss von der Getriebeeingangswelle zur Gegenplatte ("Schubbetrieb") durch eine Relativdrehung der Eingangsrampe zur Ausgangsrampe in einer der ersten Umfangsrichtung entgegen gesetzten zweiten Umfangsrichtung die Reibungskupplung zu schließen. Insbesondere können die Rampensteigungen für den Zugbetrieb von den Rampensteigungen für den Schubbetrieb abweichen, so dass unterschiedliche Übersetzungsverhältnisse von dem Rampensystem für den Zugbetrieb und den Schubbetrieb vorgesehen werden können. Besonders bevorzugt ist der maximale relative Verdrehwinkel der Eingangsrampe zu der Ausgangsrampe beispielsweise durch mindestens einen Anschlag begrenzt, wodurch beispielsweise eine Überschreitung eines maximalen Verschleißbereichs von Reibbelägen der Reibungskupplung vermieden werden kann.

Insbesondere führt die Vorsteuerkupplung beim Verdrehen der Eingangsrampe relativ zur Ausgangsrampe einen schlupfenden Reibschluss zwischen der Gegenplatte und der Getriebeeingangswelle herbei. Durch den schlupfenden Reibschluss kann in der Vorsteuerkupplung eine Drehzahldifferenz erzeugt werden, die zum relativen Verdrehen der Eingangsrampe zur Ausgangsrampe genutzt werden kann. Gleichzeitig kann im Schlupfbetrieb auch ein Drehmoment übertragen werden, das an das Rampensystem weitergeleitet werden kann, um eine entsprechend hohe Anpresskraft für die Anpressplatte bereit zu stellen.

Vorzugsweise weist die Vorsteuerkupplung mindestens eine mit der Getriebeeingangswelle koppelbare Vorsteuerkupplungsscheibe und eine relativ zur Gegenplatte axial verlagerbare Vorsteueranpressplatte zum schlupfenden Verpressen der mindestens einen Vorsteuerkupplungsscheibe mit der Gegenplatte auf, wobei die Vorsteuerkupplung insbesondere als Lamellenkupplung ausgestaltet ist. Die Vorsteueranpressplatte kann von einer Betätigungskraft verlagert werden, um die Vorsteuerkupplung zu schließen. Mit Hilfe der Vorsteueranpressplatte kann die Vorsteuerkupplungsscheibe verpresst werden, wobei insbesondere die an der Vorsteuerkupplungsscheibe angreifende Betätigungskraft von der Gegenplatte abgestützt werden kann. Hierzu kann beispielsweise ein mit der Gegenplatte drehfest verbundener Kupplungsdeckel vorgesehen sein, gegen den die Vorsteuerkupplungsscheibe reibschlüssig von der Vorsteueranpressplatte gedrückt werden kann. Die Drehzahl der Vorsteueranpressplatte kann der Drehzahl der Gegenplatte entsprechen, während die Drehzahl der Vorsteuerkupplungsscheibe der Drehzahl der Getriebeeingangswelle entsprechen kann. Vorzugsweise ist die Vorsteueranpressplatte als Lamellenträger ausgestaltet, an dem mindestens eine Zwischenplatte, insbesondere drehfest, in axialer Richtung verschiebbar geführt sein kann. Dadurch lässt sich die Anzahl der Reibpaarungen innerhalb der Vorsteuerkupplung erhöhen, so dass auch das im Schlupfbetrieb von der Vorsteuerkupplung übertragbare Drehmoment erhöht werden kann. Dadurch kann an der Anpressplatte von dem Rampensystem eine entsprechend höhere Anpresskraft angreifen. Ferner ist eine Nachstelleinrichtung zum Nachstellen eines verschleißbedingten Fehlabstands der Anpressplatte zur Gegenplatte nicht erforderlich, da bei einem Verschleiß von Reibbelägen der Kupplungsscheibe lediglich die Vorsteuerkupplung länger schlupfend betätigt werden braucht, um das Rampensystem zum Ausgleich des Verschleißes entsprechend weiter zu verdrehen.

Besonders bevorzugt ist die Eingangsrampe über ein Koppelelement, insbesondere eine Steckverzahnung, mit einem relativ zur Gegenplatte drehbaren Funktionselement der Vorsteuerkupplung bewegungsgekoppelt, wobei insbesondere die Eingangsrampe über das Koppelelement mit einer zwischen zwei Vorsteuerkupplungsscheiben verklemmbaren axial verlagerbaren Zwischenplatte bewegungsgekoppelt ist. Mit Hilfe des Koppelelements kann die Eingangsrampe mit einem Funktionselement der Vorsteuerkupplung gekoppelt werden, das im schlupfenden Betrieb der Vorsteuerkupplung mit einer Differenzdrehzahl zur Gegenplatte dreht, so dass die Eingangsrampe relativ zur Ausgangsrampe, die insbesondere drehfest mit der Anpressplatte ausgeführt ist, verdreht werden kann. Insbesondere kann das Koppelelement eine Art Massenausgleich erreichen, wodurch die Reibungskupplung unempfindlicher gegen Drehungleichförmigkeiten sein kann. Beispielsweise ist die Vorsteueranpressplatte im Wesentlichen drehfest mit der Gegenplatte gekoppelt, während die zwischen zwei Vorsteuerkupplungsscheiben verklemmbare und axial verlagerbare Zwischenplatte weder drehfest mit der Gegenplatte noch mit der Getriebeeingangswelle gekoppelt ist. Im geöffneten Zustand der Vorsteuerkupplung kann die Zwischenplatte ohne ein Drehmoment zu übertragen im Wesentlichen lastlos mit der Eingangsrampe gekoppelt sein, so dass keine Relativdrehung der Eingangsrampe zur Ausgangsrampe von der Vorsteuerkupplung ausgelöst werden kann. Bei einem Schließen der Vorsteuerkupplung kann die Zwischenplatte zwischen den Vorsteuerkupplungsscheiben reibschlüssig verpresst werden, so dass die Zwischenplatte von den Vorsteuerkupplungsscheiben in Umfangsrichtung mitgenommen werden kann und dadurch mitrotieren kann. Die Zwischenplatte kann dadurch mit einer Differenzdrehzahl eine Relativdrehung zu der Gegenplatte ausführen, wodurch mit Hilfe des Koppelelements auch die Eingangsrampe relativ zur Gegenplatte verdreht werden kann, um die axiale Erstreckung des Rampensystems zu ändern.

Vorzugsweise ist die Eingangsrampe über ein Planetengetriebe mit der Vorsteuerkupplungsscheibe koppelbar. Insbesondere kann das Koppelelement Teil des Planetengetriebes sein. Das Koppelelement kann insbesondere als Zahnrad ausgestaltet sein, das drehbar an der Vorsteueranpressplatte gelagert sein kann. Das Koppelelement kann dadurch die Funktion eines Planetenrads des Planetengetriebes übernehmen, während die Vorsteueranpressplatte den Planententräger des Planetengetriebes ausbilden kann. Das als Planetenrad wirkende Koppelelement kann insbesondere mit der zwischen zwei Vorsteuerkupplungsscheiben verklemmbaren und axial verlagerbaren Zwischenplatte und der Eingangsrampe kämmen, wobei hierbei die Zwischenplatte das Sonnenrad und die Eingangsrampe das Hohlrad des Planentengetriebes ausbilden. Über die Dimensionierung des Planetengetriebes kann eine weitere Übersetzung ereicht werden, die zu einer weiteren Verstärkung der Anpresskraft der Anpressplatte führen kann.

Insbesondere ist mit der Gegenplatte ein Kupplungsdeckel drehfest verbunden, wobei die Vorsteuerkupplung sich beim Verdrehen der Eingangsrampe relativ zur Ausgangsrampe direkt an dem Kupplungsdeckel abstützt. Der Kupplungsdeckel kann dadurch insbesondere als Gegenplatte der Vorsteuerkupplung wirken, an der die Betätigungskraft der Vorsteueranpressplatte abgestützt werden kann.

Vorzugsweise ist die Kupplungsscheibe und/oder eine Vorsteuerkupplungsscheibe der Vorsteuerkupplung über einen Drehmomentfühler mit der Getriebeeingangswelle koppelbar. Durch den Drehmomentfühler kann sowohl ein Drehmoment übertragen werden als auch eine Relativdrehung zugelassen werden. Dadurch kann die mit der Getriebeeingangswelle drehfest verbindbare Kupplungsscheibe eine Relativdrehung zu der mit der Getriebeeingangswelle drehfest verbindbaren Vorsteuerkupplungsscheibe ausführen. Dadurch kann sich das Rampensystem leicht auf das aktuell zu übertragene Drehmoment einstellen. Ferner kann ein Relativschlupf der Kupplungsscheibe zur Vorsteuerkupplungsscheibe zugelassen werden, wodurch das Verpressen der Vorsteuerkupplungsscheibe in der Vorsteuerkupplung im Wesentlich unabhängig von dem Verpressen der Kupplungsscheibe erfolgen kann ohne sich gegenseitig zu stören.

Besonders bevorzugt ist die Eingangsrampe über ein Axiallager an der Gegenplatte, insbesondere an einem drehfest mit der Gegenplatte verbundenem Kupplungsdeckel, abgestützt. Die Eingangsrampe kann dadurch an einem sowieso vorgesehenen Bauteil axial abgestützt sein, so dass eine separate Abstützung nicht erforderlich ist. Zudem ist die axiale Position der von der Ausgangsrampe wegweisenden Rückseite der Eingangsrampe vorgegeben, so dass sich bei einer Veränderung der axialen Erstreckung des Rampensystems ausschließlich die axiale Relativlage einer von der Eingangsrampe weg weisende Rückseite der Ausgangsrampe verändert. Die Rückseite der Ausgangsrampe kann dadurch als Anpressplatte zum Verpressen der Kupplungsscheibe verwendet werden.

Insbesondere ist die Gegenrampe durch die Anpressplatte ausgebildet. Die Anpressplatte der Reibungskupplung kann einstückig mit der Ausgangsrampe des Rampensystems ausgebildet sein, wodurch die Bauteileanzahl gering gehalten werden kann.

Vorzugsweise ist eine an der Anpressplatte und/oder an der Gegenrampe angreifende Rückstellfeder zur Bewegung der Anpressplatte und/oder der Gegenrampe in eine der geöffneten Stellung der Vorsteuerkupplung entsprechende Ausgangslage oder eine an einer Vorsteueranpressplatte der Vorsteuerkupplung angreifende Rückstellfeder zur Bewegung der Vorsteueranpressplatte in eine der geschlossenen Stellung der Vorsteuerkupplung entsprechende Ausgangslage vorgesehen. Durch die Rückstellfeder kann eine definierte Ausgangslage vorgegeben werden, wenn keine von einem Betätigungssystem aufgebrachte Betätigungskraft vorliegt. Durch die Rückstellfeder kann die Reibungskupplung ohne angreifende Betätigungskraft geöffnet ("normally open") oder geschlossen ("normally closed") sein. Eine Relativbewegung innerhalb der Vorsteuerkupplung und/oder eine Drehmomentübertragung von der Vorsteuerkupplung ist nicht erforderlich, um die Reibungskupplung und das Rampensystem zurück in eine Ausgangslage zu bewegen.

Besonders bevorzugt ist ein von einer von einem Betätigungssystem aufgebrachten Betätigungskraft bewegbares Betätigungselement, insbesondere eine tellerfederartige Hebelfeder, vorgesehen, wobei das Betätigungselement an der Vorsteuerkupplung angreift. Das Betätigungselement kann insbesondere um einen in Umfangsrichtung verlaufenden Schwenkpunkt schwenkbar an einem mit der Gegenplatte drehfest verbundenen Kupplungsdeckel gelagert sein. Das Betätigungselement kann die Anpressplatte insbesondere nur mittelbar über die Vorsteuerkupplung und das Rampensystem verlagern. Durch die schwenkbare Lagerung des Betätigungselements kann über das vorgesehene Hebelverhältnis eine weitere Übersetzung der Betätigungskraft vorgesehen sein, so dass mit einer vergleichsweise geringen Betätigungskraft eine besonders hohe Anpresskraft erreicht werden kann.

Die Erfindung betrifft ferner eine Doppelkupplung zum Kuppeln einer Antriebswelle eines Kraftfahrzeugmotors mit einer ersten Getriebeeingangswelle und/oder einer zweiten Getriebeeingangswelle eines Kraftfahrzeuggetriebes mit einer ersten Reibungskupplung, die insbesondere wie vorstehend beschrieben aus- und weitergebildet sein kann, zum Kuppeln der Antriebswelle mit der ersten Getriebeeingangswelle und einer zweiten Reibungskupplung, die insbesondere wie vorstehend beschrieben aus- und weitergebildet sein kann, zum Kuppeln der Antriebswelle mit der zweiten Getriebeeingangswelle. Die erste Getriebeeingangswelle und die zweite Getriebeeingangswelle sind insbesondere koaxial angeordnet, wobei vorzugsweise die zweite Getriebeeingangswelle als Hohlwelle ausgestaltet ist. Vorzugsweise sind die Gegenplatte der ersten Reibungskupplung und die Gegenplatte der zweiten Reibungskupplung durch eine gemeinsame Zentralplatte ausgestaltet, so dass sich eine Doppelkupplung nach dem "Drei-Platten-Design" ergibt. Durch die nur mittelbar über die Vorsteuerkupplung an der Anpressplatte angreifende Betätigungskraft kann über die Vorsteuerkupplung eine Kraftverstärkung und/oder eine Drehmomentabzweigung aus dem zu übertragenen Drehmoment zum Schließen der Reibungskupplung erreicht werden, so dass die Kupplungsscheibe mit einer deutlich erhöhten Anpresskraft verpresst werden kann, wodurch ein sicheres Schließen der ersten Reibungskupplung und/oder der zweiten Reibungskupplung der Doppelkupplung mit geringem konstruktivem Aufwand ermöglicht ist.

Nachfolgend wird die Erfindung unter Bezugnahme auf die anliegende Zeichnung exemplarisch erläutert, wobei die nachfolgend dargestellten Merkmale sowohl jeweils einzeln als auch in Kombination einen Aspekt der Erfindung darstellen können. Es zeigt:

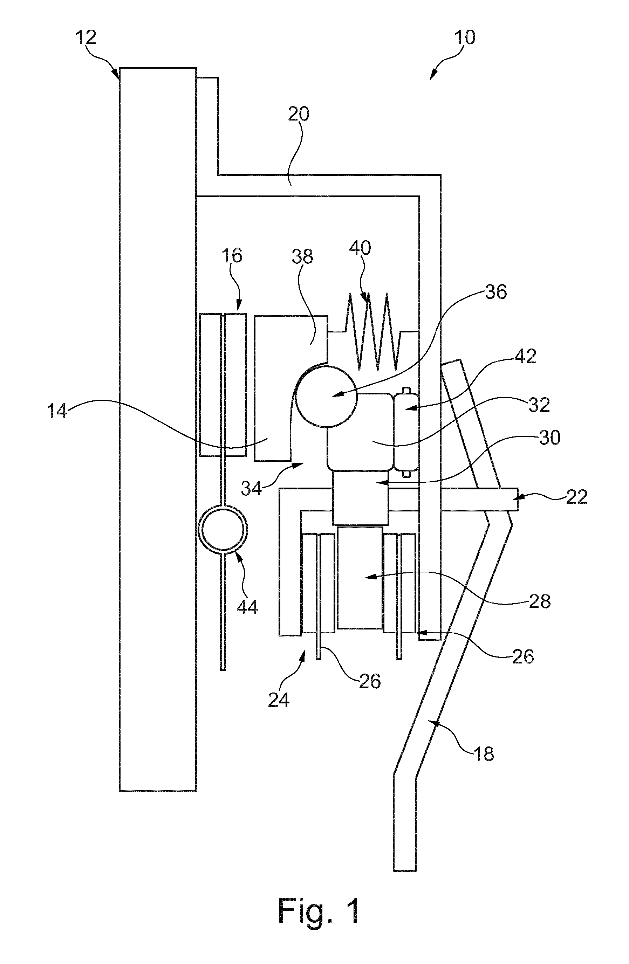

Fig. 1: eine schematische Schnittansicht einer Prinzipdarstellung einer Reibungskupplung.

Die in Fig. 1 dargestellte Reibungskupplung 10, die insbesondere Teil einer Doppelkupplung ist, weist eine Gegenplatte 12 auf, die beispielsweise mittelbar über einen Drehschwingungsdämpfer, insbesondere ein Zweimassenschwungrad, mit einer Antriebswelle eines Kraftfahrzeugmotors gekoppelt sein kann, um das von dem Kraftfahrzeugmotor erzeugte Drehmoment in die Reibungskupplung 10 einzuleiten. Mit Hilfe einer axial verlagerbaren Anpressplatte 14 kann eine drehfest mit einer Getriebeeingangswelle verbundene Kupplungsscheibe 16 zwischen der Anpressplatte 14 und der Gegenplatte 12 reibschlüssig verpresst werden.

Zum Verlagern der Anpressplatte 14 ist ein in Art einer Tellerfeder ausgestaltetes Betätigungselement 18 vorgesehen, das schwenkbar an einem mit der Gegenplatte 12 drehfest verbundenen Kupplungsdeckel 20 abgestützt ist und an dem ein hydraulisches Betätigungssystem mit einer in axialer Richtung weisenden Betätigungskraft angreifen kann. Das Betätigungselement 18 greift an einer Vorsteueranpressplatte 22 einer Vorsteuerkupplung 24 an. Zum Schließen der Reibungskupplung 10 kann zunächst die Vorsteuerkupplung 24 geschlossen werden, indem die von dem Betätigungselement 18 axial verlagerte Vorsteueranpressplatte 22 mehrere mit der Getriebeeingangswelle drehfest gekoppelte Vorsteuerkupplungsscheiben 26 auf den als Gegenplatte wirkenden Kupplungsdeckel 20 zu drückt. Zwischen zwei in axialer Richtung hintereinander vorgesehenen Vorsteuerkupplungsscheiben 26 kann eine Zwischenplatte 28 vorgesehen sein, die relativ drehbar zur Vorsteueranpressplatte 22 ausgeführt ist.

Wenn die Vorsteuerkupplungsscheiben 26 schlupfend verpresst werden, können die Vorsteuerkupplungsscheiben 26 die Zwischenplatte 28 mitnehmen, so dass die Zwischenplatte 28 eine Relativdrehung zur Gegenplatte 12 erfährt. Die Zwischenplatte 28 kämmt mit einem in der Art eines Planetenrads eines Platengetriebes als Zahnrad ausgestalteten Koppelelement 30, das wiederum mit einer Eingangsrampe 32 eines als Kugelrampe ausgestalteten Rampensystems 34 kämmt. Die Eingangsrampe 32 ist über eine Kugel 36 an einer Ausgangsrampe 38 abgestützt, wobei die Ausgangsrampe 38 im dargestellten Ausführungsbeispiel einstückig mit der Anpressplatte 14 ausgebildet ist. Die Anpressplatte 14 dreht im Wesentlichen mit der gleichen Drehzahl wie die Gegenplatte 12. Hierzu ist die Anpressplatte 14 beispielsweise über eine Verdrehsicherung mit der Gegenplatte 12 gekoppelt. Ferner kann eine mit der Anpressplatte 14 beziehungsweise mit der Ausgangsrampe 38 und mit dem Kupplungsdeckel 20 verbundenen Rückstellfeder 40 eine Verdrehsicherung ausbilden. Die Eingangsrampe 32 ist über ein Axiallager 42 an dem Kupplungsdeckel abgestützt. Bei einer Verdrehung der Eingangsrampe 32 relativ zum Kupplungsdeckel 20 infolge der über das Koppelelement 30 eingeleiteten Drehzahldifferenz zwischen der Gegenplatte 12, dem Kupplungsdeckel 20 und der Vorsteueranpressplatte 22 einerseits und der Getriebeeingangswelle, der Vorsteuerkupplungsscheibe 26 und der Zwischenplatte 28 andererseits, kann eine Rückseite der Ausgangsrampe 38 von der Eingangsrampe 32 wegwandern, wodurch sich die Erstreckung des Rampensystems 34 vergrößert. Dadurch kann die Anpressplatte 14 auf die Gegenplatte 12 zu verlagert werden, um die Kupplungsscheibe 16 zu verpressen, wodurch die Reibungskupplung geschlossen wird. Hierbei kann die Anpresskraft der Anpressplatte durch die mit Hilfe des Betätigungselements 18, des Koppelelements 30 und/oder des Rampensystems 34 erreichbaren Kraftübersetzung sowie eines über die Vorsteuerkupplung 24 abgezweigten Anteils des über die Gegenplatte 12 eingeleiteten Drehmoments erheblich größer als die in das Betätigungselement 18 eingeleitete Betätigungskraft sein, so dass ein entsprechend höheres maximales Drehmoment von der Reibungskupplung 10 übertragen werden kann.

Wenn keine Betätigungskraft mehr in das Betätigungselement 18 eingeleitet wird, kann die insbesondere als Blattfeder ausgestaltete Rückstellfeder 40 die Anpressplatte 14 auf die Eingangsrampe 32 zu ziehen, so dass das Rampensystem 34 zurückgedreht werden kann. Ferner weist die Kupplungsscheibe 16 einen Drehmomentfühler 44 auf, so dass die Kupplungsscheibe 16 in einem begrenzten Ausmaß eine Relativdrehung zu den Vorsteuerkupplungsscheiben 26 ausführen kann.

### Bezugszeichenliste

- 10: Reibungskupplung
- 12: Gegenplatte
- 14: Anpressplatte
- 16: Kupplungsscheibe
- 18: Betätigungselement
- 20: Kupplungsdeckel
- 22: Vorsteueranpressplatte
- 24: Vorsteuerkupplung
- 26: Vorsteuerkupplungsscheibe
- 28: Zwischenplatte
- 30: Koppelelement
- 32: Eingangsrampe
- 34: Rampensystem
- 36: Kugel
- 38: Ausgangsrampe
- 40: Rückstellfeder
- 42: Axiallager
- 44: Drehmomentfühler

## Patentansprüche

1. Reibungskupplung zum Kuppeln einer Antriebswelle eines Kraftfahrzeugmotors mit mindestens einer Getriebeeingangswelle, insbesondere für eine Doppelkupplung, mit einer mit der Antriebswelle koppelbaren Gegenplatte (12) zum Einleiten eines Drehmoments
einer relativ zur Gegenplatte (12) axial verlagerbare Anpressplatte (14) zum reibschlüssigen Verpressen einer mit einer Getriebeeingangswelle koppelbaren Kupplungsscheibe (16) zum Ausleiten des Drehmoments zwischen der Anpressplatte (14) und der Gegenplatte (12),
einem an der Anpressplatte (14) angreifbaren Rampensystem (34) zum Verlagern der mindestens einen Anpressplatte (14) relativ zur Gegenplatte (12), wobei das Rampensystem (34) eine Eingangsrampe (32) und eine relativ zur Eingangsrampe (32) zur Veränderung einer axialen Erstreckung des Rampensystems (34) verdrehbare Ausgangsrampe (38) aufweist, und
einer Vorsteuerkupplung (24) zum Auslösen eines Verdrehens der Eingangsrampe (32) relativ zur Ausgangsrampe (38) infolge einer Differenzdrehzahl der Gegenplatte (12) zur Getriebeeingangswelle.

2. Reibungskupplung nach Anspruch 1 **dadurch gekennzeichnet, dass** die Vorsteuerkupplung (24) beim Verdrehen der Eingangsrampe (32) relativ zur Ausgangsrampe (38) einen schlupfenden Reibschluss zwischen der Gegenplatte (12) und der Getriebeeingangswelle herbeiführt.

3. Reibungskupplung nach Anspruch 1 oder 2 **dadurch gekennzeichnet, dass** die Vorsteuerkupplung (24) mindestens eine mit der Getriebeeingangswelle koppelbare Vorsteuerkupplungsscheibe (26) und eine relativ zur Gegenplatte (12) axial verlagerbare Vorsteueranpressplatte (22) zum schlupfenden Verpressen der mindestens einen Vorsteuerkupplungsscheibe (26) mit der Gegenplatte (12) aufweist, wobei die Vorsteuerkupplung (26) insbesondere als Lamellenkupplung ausgestaltet ist.

4. Reibungskupplung nach einem der Ansprüche 1 bis 3 **dadurch gekennzeichnet, dass** die Eingangsrampe (32) über ein Koppelelement (30), insbesondere eine Steckverzahnung, mit einem relativ zur Gegenplatte (12) drehbaren Funktionselement der Vorsteuerkupplung (24) bewegungsgekoppelt ist, wobei insbesondere die Eingangsrampe (32) über das Koppelelement (30) mit einer zwischen zwei Vorsteuerkupplungsscheiben (26) verklemmbaren axial verlagerbaren Zwischenplatte (28) bewegungsgekoppelt ist.

5. Reibungskupplung nach einem der Ansprüche 1 bis 4 **dadurch gekennzeichnet, dass** die Eingangsrampe (32) über ein Planetengetriebe mit der Vorsteuerkupplungsscheibe (26) koppelbar ist.

6. Reibungskupplung nach einem der Ansprüche 1 bis 5 **dadurch gekennzeichnet, dass** mit der Gegenplatte (12) ein Kupplungsdeckel (20) drehfest verbunden ist, wobei die Vorsteuerkupplung (24) sich beim Verdrehen der Eingangsrampe (32) relativ zur Ausgangsrampe (38) direkt an dem Kupplungsdeckel (20) abstützt.

7. Reibungskupplung nach einem der Ansprüche 1 bis 6 **dadurch gekennzeichnet, dass** die Kupplungsscheibe (16) und/oder eine Vorsteuerkupplungsscheibe (26) der Vorsteuerkupplung (24) über einen Drehmomentfühler (44) mit der Getriebeeingangswelle koppelbar ist.

8. Reibungskupplung nach einem der Ansprüche 1 bis 7 **dadurch gekennzeichnet, dass** die Eingangsrampe (32) über ein Axiallager (42) an der Gegenplatte (12), insbesondere an einem drehfest mit der Gegenplatte (12) verbundenem Kupplungsdeckel (20), abgestützt ist.

9. Reibungskupplung nach einem der Ansprüche 1 bis 8 **dadurch gekennzeichnet, dass** eine an der Anpressplatte (14) und/oder an der Gegenrampe (38) angreifende Rückstellfeder (40) zur Bewegung der Anpressplatte (14) und/oder der Gegenrampe (38) in eine der geöffneten Stellung der Vorsteuerkupplung (24) entsprechende Ausgangslage oder eine an einer Vorsteueranpressplatte (22) der Vorsteuerkupplung (24) angreifende Rückstellfeder (40) zur Bewegung der Vorsteueranpressplatte (22) in eine der geschlossenen Stellung der Vorsteuerkupplung (24) entsprechende Ausgangslage vorgesehen ist.

10. Reibungskupplung nach einem der Ansprüche 1 bis 9 **dadurch gekennzeichnet, dass** ein von einer von einem Betätigungssystem aufgebrachten Betätigungskraft bewegbares Betätigungselement (18), insbesondere eine tellerfederartige Hebelfeder, vorgesehen ist, wobei das Betätigungselement (18) an der Vorsteuerkupplung (24) angreift.
